(19) Europäisches Patentamt
European Patent Office
Office européen des brevets

(11) **EP 4 553 328 A1**

(12) **EUROPEAN PATENT APPLICATION**
published in accordance with Art. 153(4) EPC

(43) Date of publication:
**14.05.2025 Bulletin 2025/20**

(21) Application number: **23835457.5**

(22) Date of filing: **03.07.2023**

(51) International Patent Classification (IPC):
**F16C 29/06** (2006.01)

(52) Cooperative Patent Classification (CPC):
**F16C 29/06**

(86) International application number:
**PCT/JP2023/024551**

(87) International publication number:
**WO 2024/009925 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.07.2022 JP 2022109425**

(71) Applicant: **THK Co., Ltd.**
**Tokyo 108-8506 (JP)**

(72) Inventor: **HAYASHI, Yuki**
**Tokyo 108-8506 (JP)**

(74) Representative: **Grünecker Patent- und Rechtsanwälte PartG mbB Leopoldstraße 4 80802 München (DE)**

(54) **MOTION GUIDE DEVICE**

(57) Provided is a motion guide apparatus capable of improving performance such as the repeated durability of and movement in a turn portion.

The motion guide apparatus sandwiches a ball (3) between a wall surface of a rolling groove (7) of a rail member (2) and a wall surface of a turn groove (10) of a block (4) to change the course of the ball (3) that has moved along a rolling path. $\alpha + \beta < 180°$ is satisfied where $\alpha$ is a rail member-side angle, and $\beta$ is a block-side angle.

*FIG. 7*

EMBODIMENT

## Description

Technical Field

The present invention relates to a motion guide apparatus for guiding rectilinear or curvilinear motion of a movable body such as a table.

Background Art

A motion guide apparatus for guiding rectilinear or curvilinear motion of a movable body such as a table is known (refer to Patent Literature 1). The motion guide apparatus includes a rail member, and a block that is movable relative to the rail member. A plurality of balls is interposed between the rail member and the block in such a manner as to be capable of rolling motion.

The rail member includes a rolling groove extending in a longitudinal direction. The block includes a rolling groove facing the rolling groove of the rail member, and includes a return portion and turn portions.

A rolling path between the rolling groove of the rail member and the rolling groove of the block, the return portion, and the turn portions form a circulation path. The plurality of balls is placed in the circulation path. When the block is moved relative to the rail member, the balls move along the rolling path. The balls that have moved along the rolling path are guided to the turn portion, then move in an opposite direction along the return portion, and then are guided from the other turn portion to the rolling path.

Citation List

Patent Literature

Patent Literature 1: WO 2008/041589 A

Summary of Invention

Technical Problem

However, the known motion guide apparatus has a problem that the movement of the balls in the turn portions is not excellent.

The present invention has been made in view of the above problem, and an object thereof is to provide a motion guide apparatus capable of improving performance such as the movement of balls in a turn portion and the repeated durability of the turn portion.

Solution to Problem

In order to solve the above problem, one aspect of the present invention is a motion guide apparatus including: a rail member including a rolling groove extending in a longitudinal direction; a block including a rolling groove facing the rolling groove of the rail member, a return portion, and a turn portion connected to the rolling groove and the return portion; and a plurality of balls placed in a circulation path including a rolling path between the rolling groove of the rail member and the rolling groove of the block, the return portion, and the turn portion, in which the balls are sandwiched between a wall surface of the rolling groove of the rail member and a wall surface of at least part of a turn groove of the turn portion of the block to change the course of the balls that have moved along the rolling path, and $\alpha + \beta < 180°$ is satisfied where $\alpha$ is a rail member-side angle formed by a line linking an effective end of the rolling groove of the rail member and a center of the ball on the rolling groove of the rail member, and a rolling groove center line of the rail member, and $\beta$ is a block-side angle formed by a line linking a contact point of the turn groove of the block and the ball and the center of the ball on the rolling groove of the rail member, and the rolling groove center line of the rail member.

Advantageous Effects of Invention

According to the one aspect of the present invention, it is possible to produce a resultant component in the direction of the course of the turn groove in a resultant of a reaction force acting on the ball from the rail member and a reaction force acting on the ball from the block. It is possible to smoothly guide the balls that have moved along the rolling path to the turn groove. Therefore, it is possible to improve performance such as the movement of the balls in the turn groove and the repeated durability of the turn groove.

Brief Description of Drawings

> Fig. 1 is a perspective view of a motion guide apparatus of one embodiment of the present invention.
> Fig. 2(a) is a plan view of the motion guide apparatus of the embodiment, and Fig. 2(b) is a side view.
> Fig. 3 is a front view of the motion guide apparatus of the embodiment.
> Fig. 4(a) illustrates a bottom perspective view of a block of the embodiment, and Fig. 4(b) illustrates a top perspective view of the inverted block of the embodiment.
> Fig. 5 is a schematic diagram illustrating a block processing method of the embodiment.
> Fig. 6 is a cross-sectional view illustrating changes in the cross-sectional shape of a turn groove of the block of the embodiment.
> Fig. 7 is a diagram (an enlarged view of main elements of Fig. 6(a)) for explaining $\alpha$ and $\beta$ of the embodiment.
> Fig. 8 is a diagram for explaining $\alpha$ and $\beta$ of a comparative example.
> Fig. 9 is a diagram (an enlarged view of main elements of Fig. 6(b)) for explaining $\gamma$ and $\delta$ of the

embodiment.

Description of Embodiments

Embodiments of a motion guide apparatus according to the present invention are described in detail hereinafter with reference to the accompanying drawings. However, the motion guide apparatus according to the present invention can be embodied in various forms and is not limited to the embodiments described in the description. The embodiments are provided with the intention of enabling those skilled in the art to fully understand the invention by fully disclosing the description.

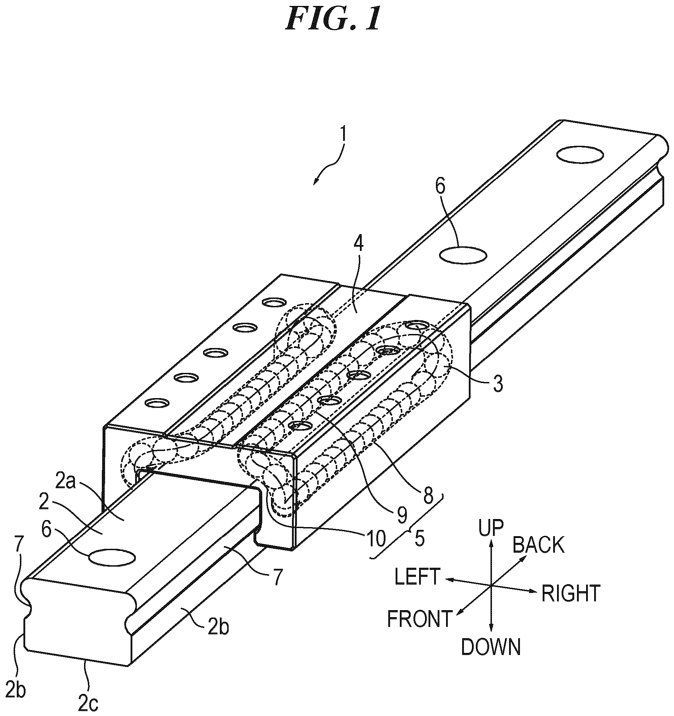

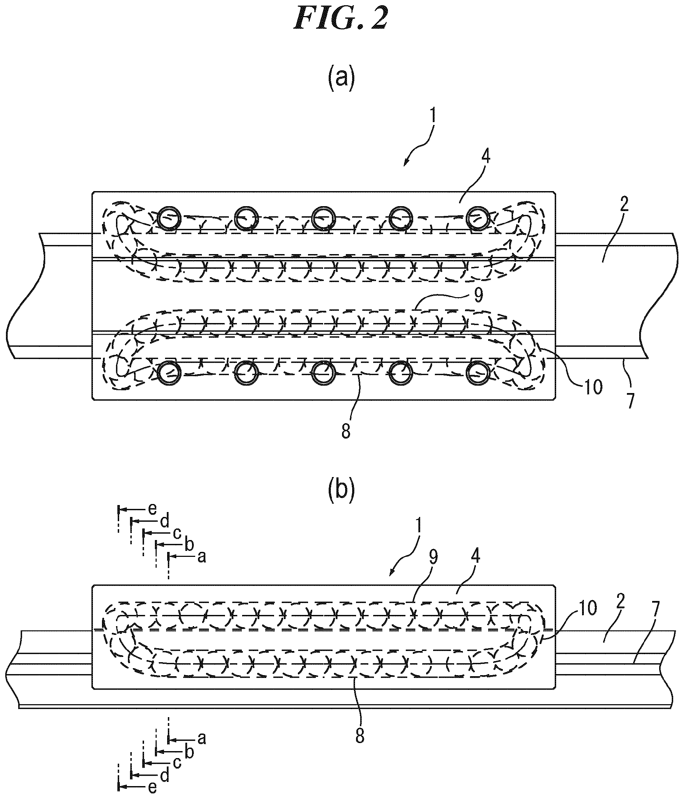

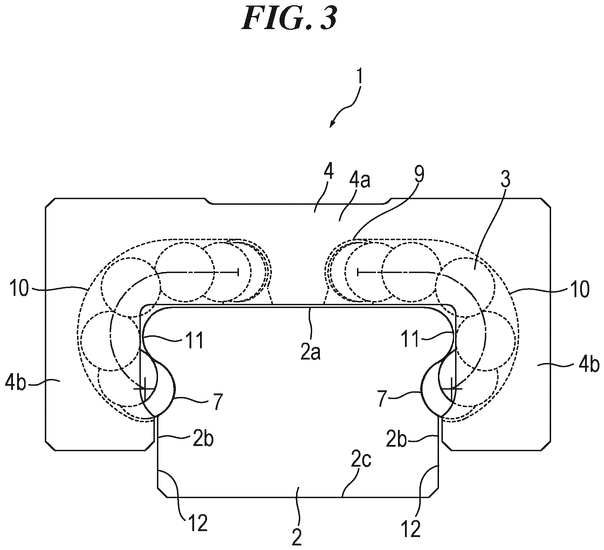

Fig. 1 illustrates a perspective view of a motion guide apparatus 1 of one embodiment of the present invention. Fig. 2 illustrates a side view of the motion guide apparatus 1 of the embodiment. Fig. 3 illustrates a front view of the motion guide apparatus 1 of the embodiment. The motion guide apparatus 1 of the embodiment is a linear guide including a rail member 2, and a block 4 that is movable relative to the rail member 2. A plurality of balls 3 is interposed between the rail member 2 and the block 4 in such a manner as to be capable of rolling motion. A circulation path 5 that circulates the plurality of balls 3 is formed in the block 4.

Note that hereafter, for convenience of description, directions relative to the rail member 2 mounted on a horizontal surface as viewed in a longitudinal direction, that is, directions of up-down, left-right, and front-back in Fig. 1, are used to describe the configuration of the motion guide apparatus 1. Naturally, the placement of the motion guide apparatus 1 is not limited to the above, and the rail member 2 may be mounted on a vertical surface, or the motion guide apparatus 1 may be flipped vertically.

As illustrated in Fig. 1, the rail member 2 is a rail extending linearly. The rail member 2 includes a top surface 2a, a pair of left and right side surfaces 2b, and an undersurface 2c. A rolling groove 7 extending in the longitudinal direction is formed on the side surface 2b of the rail member 2. The rolling groove 7 has a Gothic arch shape. The rolling groove 7 may have a circular arc shape. A plurality of mounting holes 6 for mounting the rail member 2 on a base is formed in the top surface 2a of the rail member 2. Note that the rail member 2 may extend in a curved path. The number of the rolling grooves 7 can be set at, for example, two or four as appropriate. Moreover, the placement of the rolling groove 7 can also be set as appropriate.

As illustrated in Fig. 3, the block 4 has an approximately U shape in cross section and is formed in such a manner as to be astride the rail member 2. The block 4 includes a web portion 4a facing the top surface 2a of the rail member 2, and a pair of sleeve portions 4b that hangs down from two end portions in a left-and-right direction of the web portion 4a and faces the side surfaces 2b of the rail member 2. The block 4 of the motion guide apparatus 1 of the embodiment is a single structure. As illustrated in Fig. 1, a rolling groove 8, a return portion 9, and turn portions 10 are formed in the block 4. The rolling groove 8 faces the rolling groove 7 of the rail member 2.

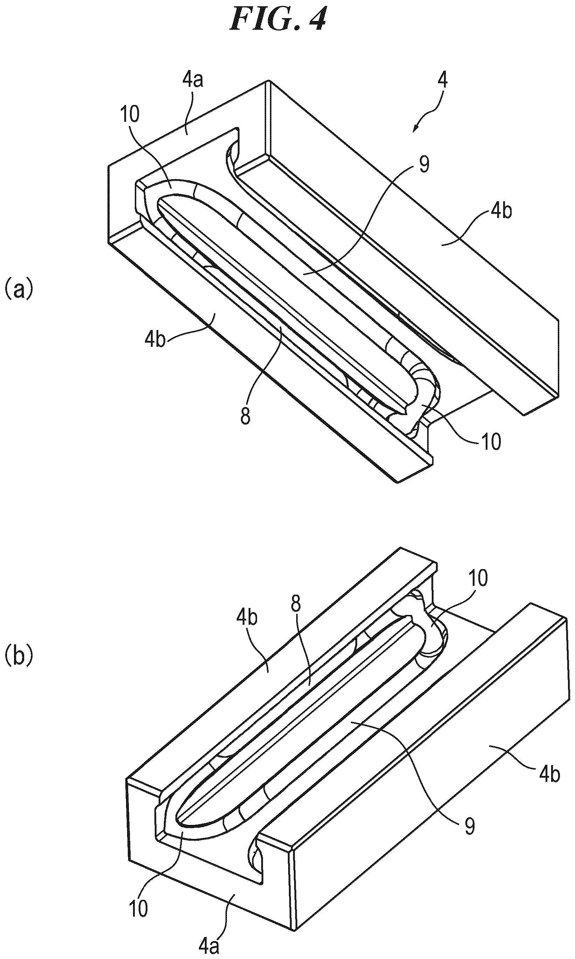

Fig. 4(a) illustrates a bottom perspective view of the block 4, and Fig. 4(b) illustrates a top perspective view of the inverted block 4. The rolling groove 8 is formed in the sleeve portion 4b of the block 4. The rolling groove 8 has a Gothic arch shape. The rolling groove 8 may have a circular arc shape.

In the web portion 4a of the block 4, the return portion 9 is formed substantially parallel to the rolling groove 8. The return portion 9 is a groove that is open toward the rail member 2. The return portion 9 is referred to below as the return groove 9. In the block 4, the turn portions 10 connected to the rolling groove 8 and the return groove 9 are formed from the sleeve portion 4b to the web portion 4a of the block 4. The turn portions 10 are grooves that are open toward the rail member 2. The turn portions 10 are referred to below as the turn grooves 10.

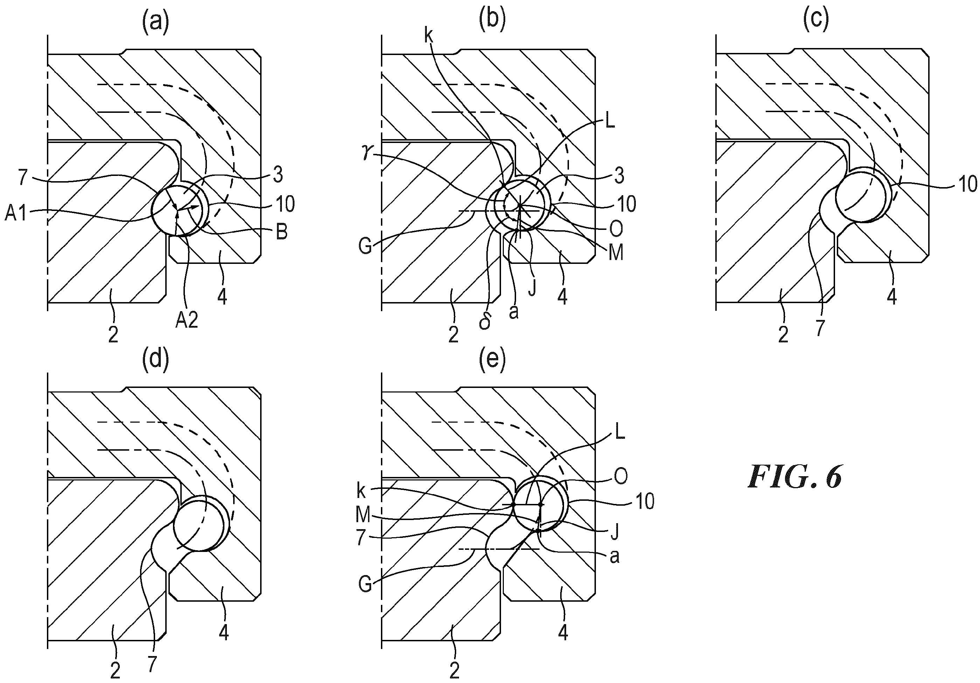

Note that the return groove 9 may be a through-hole. Moreover, each of the turn grooves 10 is simply required to be a groove at least in a section from a start point of a turn (refer to Fig. 6(a)) to an apex of the turn (refer to Fig. 6(e)). A section from the apex of the turn (refer to Fig. 6(e)) to the return groove 9 may be a through-hole.

As illustrated in Fig. 3, of a pair of side surfaces 11 and 12 of the rail member 2 outside the rolling groove 7, the upper side surface 11 that comes into contact with the balls 3 protrudes toward the block 4 more than the lower side surface 12 that does not come into contact with the balls 3. The cross-sectional shape of the upper side surface 11 of the rail member 2 is an approximately arc shape. The turn grooves 10 of the block 4 curve along the upper side surface 11. The turn grooves 10 have an approximately J shape.

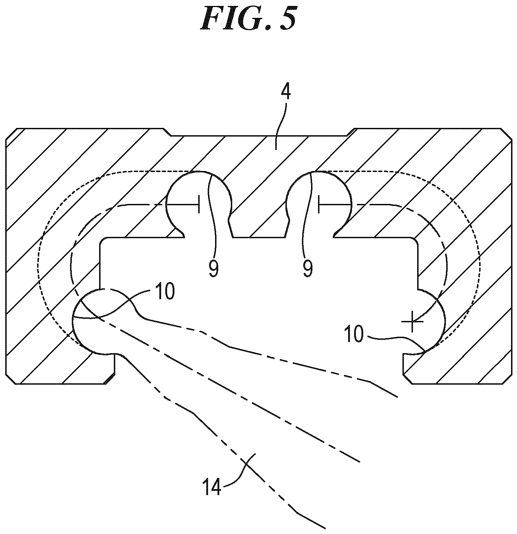

As illustrated in Fig. 5, the rolling groove 8 (refer to Fig. 4), the return groove 9, and the turn grooves 10 of the block 4 are continuously formed in the block 4 using a cutting tool 14 such as an end mill. Connecting portions of the rolling groove 8, the turn grooves 10, and the return groove 9 are seamless, and there are no joints. Although details are described below, the turn grooves 10 are formed in an undercut shape toward an opening. Hence, it is desirable to use a lollipop end mill having an approximately spherical head portion and a constricted neck portion, as the cutting tool 14. Note that the cutting tool 14 is not limited to an end mill. Moreover, the rolling groove 8, the turn grooves 10, and the return groove 9 may be continuously formed in the block 4 by plasticity processing such as forging or pressing other than cutting.

As illustrated in Figs. 1 and 2, a rolling path between the rolling groove 7 of the rail member 2 and the rolling groove 8 of the block 4, the return groove 9, and the turn grooves 10 form the circulation path 5. The plurality of balls 3 is placed in the circulation path 5. When the block 4 is moved relative to the rail member 2, the balls 3 roll on the rolling path. The balls 3 that have moved to one end of the rolling path are guided to the turn groove 10, move in an opposite direction along the return groove 9, and then are guided from the other turn groove 10 to the other end of the rolling path.

Fig. 6 illustrates changes in the cross-sectional shape of the turn groove 10 of the block 4. Fig. 6(a) illustrates a cross-sectional view taken along line a-a of Fig. 2(b). Fig. 6(b) illustrates a cross-sectional view taken along line b-b of Fig. 2(b). Fig. 6(c) illustrates a cross-sectional view taken along line c-c of Fig. 2(b). Fig. 6(d) illustrates a cross-sectional view taken along line d-d of Fig. 2(b). Fig. 6(e) illustrates a cross-sectional view taken along line e-e of Fig. 2(b).

Fig. 6(a) illustrates the start point of the turn of the turn groove 10. The ball 3 that has moved along the rolling path reaches the start point of the turn of the turn groove 10 illustrated in Fig. 6(a). The ball 3 that has reached the start point of the turn is sandwiched between a wall surface of the rolling groove 7 of the rail member 2 and a wall surface of the turn groove 10 of the block 4, and changes its course to the right in the drawings as illustrated in Figs. 6(a) and 6(b).

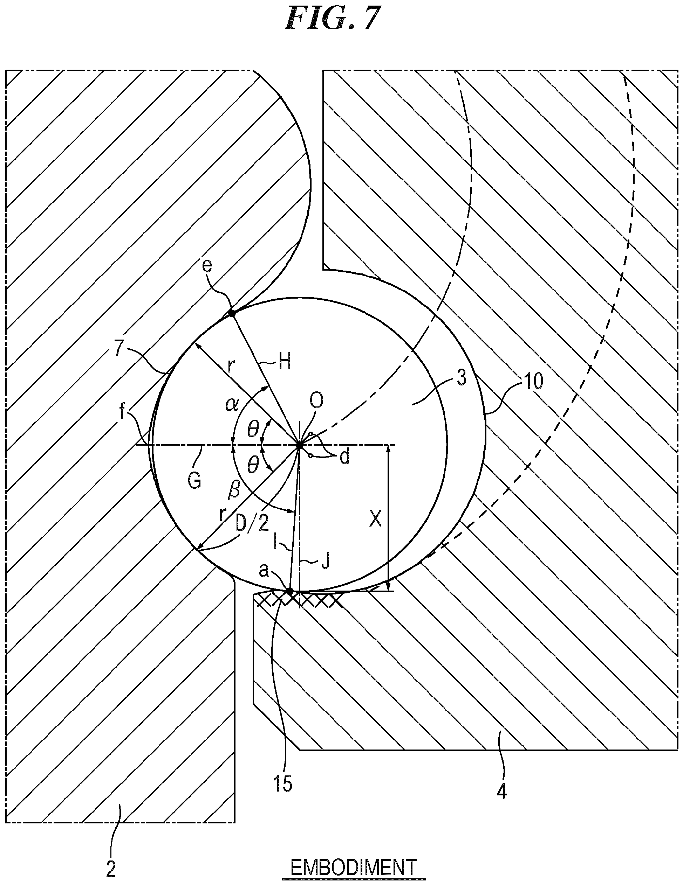

Fig. 7 illustrates an enlarged view of main elements of Fig. 6(a). The rolling groove 7 of the rail member 2 has a Gothic arch shape. In other words, the rolling groove 7 includes two arcs with a radius r that is slightly greater than the radius of the ball 3. The center of the two arcs with the radius r is d. The ball 3 contacts the rolling groove 7 at two points. O is the center of the ball 3 on the rolling groove 7. The contact angle of the ball 3 relative to the rolling groove 7 is θ. The effective area of the rolling groove 7 is the arc portion with the constant radius r. e is an effective end (an end of the effective area) of the rolling groove 7. A rolling groove center line G is the center line of the rolling groove 7. In this embodiment, the rolling groove center line G is a line linking an intersection point f of the two arcs with the radius r and the center O of the ball 3.

The motion guide apparatus 1 of the embodiment satisfies the following expression (1):

$$\alpha + \beta < 180° \quad ... \quad (1)$$

In the expression (1), α is a rail member-side angle formed by a line H linking the effective end e of the rolling groove 7 of the rail member 2 and the center O of the ball 3 on the rolling groove 7 of the rail member 2, and the rolling groove center line G of the rail member 2. Note that the ball 3 comes into contact with the rolling groove 7 of the rail member 2 at the contact angle θ; however, the angle α formed by the line H linking the effective end e of the rolling groove 7 of the rail member 2 and the center O of the ball 3 on the rolling groove 7 of the rail member 2, and the rolling groove center line G of the rail member 2 is used as α to ensure that a resultant component B (refer to Fig. 6(a)) in the direction of the path of the turn groove 10 is produced.

β is a block-side angle formed by a line I linking the center O of the ball 3 on the rolling groove 7 of the rail member 2 and a contact point a of the turn groove 10 of the block 4 and the ball 3, and the rolling groove center line G of the rail member 2.

The motion guide apparatus 1 of the embodiment can smoothly guide the ball 3 to the turn groove 10 by satisfying the expression (1). The reason for it is described below.

As illustrated in Fig. 6(a), a reaction force indicated by an arrow A1 from the rail member 2 side and a reaction force indicated by an arrow A2 from the block 4 side act on the ball 3 sandwiched between the wall surface of the rolling groove 7 of the rail member 2 and the wall surface of the turn groove 10 of the block 4. The expression (1) is satisfied to produce the resultant component B in the direction of the path of the turn groove 10, in the resultant of the two reaction forces. With the resultant component B, it is possible to smoothly guide the ball 3 that has moved along the rolling path to the turn groove 10.

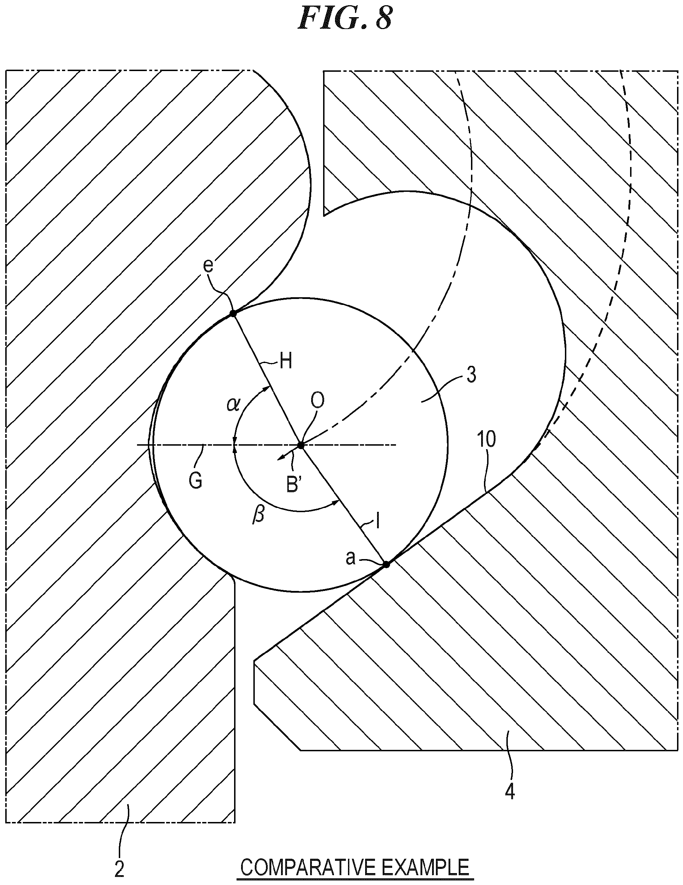

Fig. 8 illustrates a comparative example that does not satisfy the expression (1). If α + β ≥ 180°, the resultant of the reaction force acting on the ball 3 from the rail member 2 side and the reaction force acting on the ball 3 from the block 4 side has a resultant component B' in a direction opposite to the direction of the path of the turn groove 10. Hence, it is difficult to guide the ball 3 in the direction of the path of the turn groove 10.

Again, as illustrated in Fig. 7, in the motion guide apparatus 1 of the embodiment, the contact point a of the turn groove 10 of the block 4 with the ball 3 is placed on a line J that passes through the center O of the ball 3 and is orthogonal to the rolling groove center line G of the rail member 2, or closer to the rail member 2 than the line J is to the rail member 2. Hence, the cross-sectional shape of the turn groove 10 has an undercut shape toward the opening. An undercut portion 15 (a protruding portion) indicated by cross hatching in the drawing is formed in the cross-sectional shape of the turn groove 10. In addition, a distance X between the rolling groove center line G and the contact point a is equal to or less than a ball radius D/2.

The contact point a is placed close to the rail member 2 in this manner, and accordingly the block-side angle β can be reduced. Therefore, the resultant component B in the direction of the path of the turn groove 10 can be further increased.

As illustrated in Fig. 6, the motion guide apparatus 1 of the embodiment satisfies the following expression (2) in an area from the start point of the turn of the turn groove 10 of the block 4 (refer to Fig. 6(a)) to a point where a shape angle γ of the rail member side surface becomes 0° (refer to Fig. 6(e)):

$$\gamma + \delta < 180° \quad ... \quad (2)$$

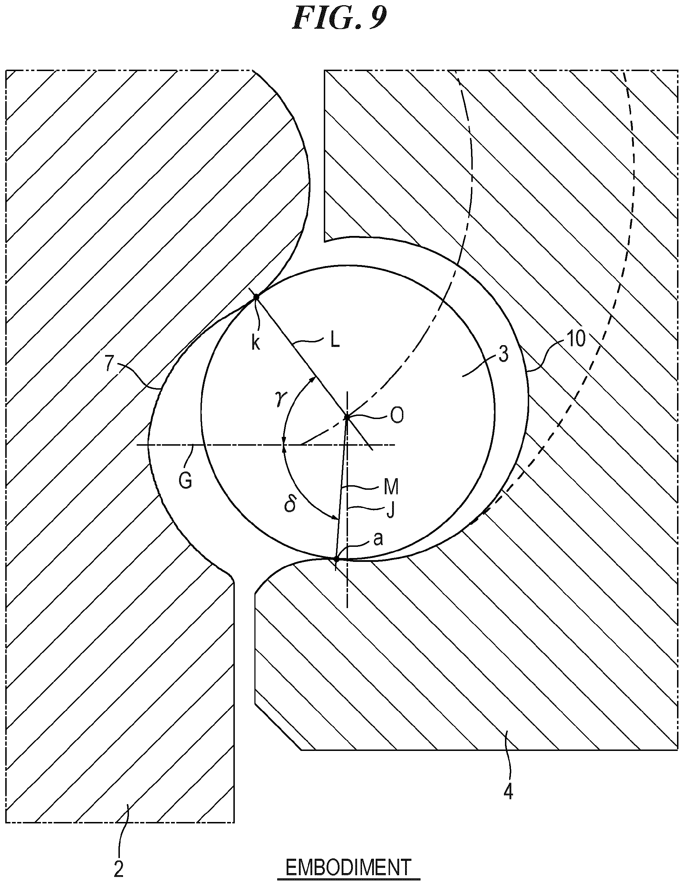

In the expression (2), as illustrated in Fig. 6(b) and Fig. 9 that is an enlarged view of main elements of Fig. 6(b), γ is the angle formed by a line L linking a contact point k of the profile of the cross section of the rail member 2 and the ball 3 and the center O of the ball 3, and the rolling groove center line G of the rail member 2. The maximum value of γ is α. δ is the block-side angle formed by a line M linking the contact point a of the turn groove 10 of the block 4 and the ball 3 and the center O of the ball 3, and the rolling groove center line G of the rail member 2.

The motion guide apparatus 1 of the embodiment satisfies the expression (2) from the start point of the turn to the point where γ becomes 0°. Therefore, it is possible to cause the resultant component B in the direction of the path of the turn groove 10 to act on the ball 3 from the start point of the turn to the point where γ becomes 0°, that is, a point where the line L and the rolling groove center line G become parallel to each other (refer to Fig. 6(e)).

Moreover, as illustrated in Fig. 6, in the motion guide apparatus 1 of the embodiment, the contact point a of the turn groove 10 of the block 4 with the ball 3 is placed on the line J that passes through the center O of the ball 3 and is orthogonal to the rolling groove center line G of the rail member 2, or closer to the rail member 2 than the line J is to the rail member 2, from the start point of the turn of the turn groove 10 of the block 4 (refer to Fig. 6(a)) to the point where γ becomes 0° (refer to Fig. 6(e)).

In this manner, the block-side angle δ can be reduced. Therefore, the resultant component B in the direction of the path of the turn groove 10 can be increased.

When γ is reduced to below 0°, the ball 3 climbs over the apex of the turn illustrated in Fig. 6(e) and is constrained only by the turn groove 10 of the block 4. The ball 3 is pushed by the following ball 3, moves along the turn groove 10, and reaches the return groove 9 (refer to Fig. 3).

Note that the rolling groove 7 of the rail member 2 may have a circular arc shape. In this case, the rolling groove center line G of the rail member 2 is defined by a contact angle line.

Up to this point, the configuration and operations of the motion guide apparatus 1 of the embodiment have been described. The motion guide apparatus 1 of the embodiment has the following effects:

It is possible to sandwich the ball 3 that has moved along the rolling path and reached the start point of the turn of the turn groove 10 (refer to Fig. 6 (a)) between the rolling groove 7 of the rail member 2 and the rolling groove 8 of the block 4, and to cause the resultant component B in the direction of the path of the turn groove 10 to act on the ball 3. Hence, the performance such as the repeated durability of the turn groove 10 and the movement of the ball 3 can be improved.

The contact point a of the turn groove 10 with the ball 3 is placed on the line J, or closer to the rail member 2 than the line J is to the rail member 2. Therefore, the resultant component B in the direction of the path of the turn groove 10 can be increased.

It is possible to cause the resultant component B in the direction of the path of the turn groove 10 to act on the ball 3 in the area from the start point of the turn of the turn groove 10 to the point where γ becomes 0°.

In the area from the start point of the turn of the turn groove 10 to the point where γ becomes 0°, the contact point a of the turn groove 10 of the block 4 and the ball 3 is placed on the line J, or closer to the rail member 2 than the line J is to the rail member 2. Therefore, the resultant component B in the direction of the path of the turn groove 10 can be increased.

Of the pair of side surfaces 11 and 12 of the rail member 2 outside the rolling groove 7, one side surface 11 that comes into contact with the ball 3 protrudes toward the block 4 more than the other side surface 12 that does not come into contact with the ball 3. Therefore, it is easy to cause the resultant component B in the direction of the path to act on the ball 3.

The rolling groove 8 and the turn grooves 10 are continuously formed in the block 4 that is a single structure, and therefore, can be joined seamlessly. Hence, the movement of the ball 3 can be improved.

Note that the present invention is not limited to concretization of the above embodiment, and can be concretized in other embodiments within the scope that does not change the purport of the present invention.

For example, in the above embodiment, the rolling groove and the turn grooves are formed in the block that is a single structure. However, the block may include a block body and lid members that are mounted on end surfaces of the block body, the rolling groove may be formed in the block body, and the turn grooves may be formed in the lid members.

In the above embodiment, the example of a full ball type has been described. However, a spacer may be interposed between the balls.

In the above embodiment, the example of the outer block type linear guide in which the block having an approximately U shape in cross section is astride the rail member has been described. However, an inner block type linear guide may be used in which an inner block is placed in an outer rail having an approximately U shape in cross section.

In the above embodiment, the example in which the motion guide apparatus is a linear guide has been described. However, the motion guide apparatus may be a ball spline.

The present description is based on Japanese Patent Application No. 2022-109425 filed on July 7, 2022. The entire contents thereof are incorporated herein.

Reference Signs List

1 Motion guide apparatus
2 Rail member
3 Ball
4 Block
7 Rolling groove of the rail member
8 Rolling groove of the block
9 Return groove (return portion)
10 Turn groove (turn portion)
11 One side surface of the rail member outside the rolling groove
12 The other side surface of the rail member outside the rolling groove
e Effective end
O Center of the ball
H Line linking the effective end e of the rolling groove of the rail member and the center O of the ball on the rolling groove of the rail member
G Rolling groove center line of the rail member
$\alpha$ Rail member-side angle
a Contact point of the turn groove of the block and the ball
I Line linking the contact point a of the turn groove of the block and the ball, and the center O of the ball on the rolling groove of the rail member
$\beta$ Block-side angle
J Line that passes through the center O of the ball and is orthogonal to the rolling groove center line G of the rail member
k Contact point of the profile of a cross section of the rail member and the ball
L Line linking the contact point k of the profile of a cross section of the rail member and the ball, and the center O of the ball
$\gamma$ Shape angle of the rail member side surface
M Line linking the contact point a of the turn groove of the block and the ball, and the center O of the ball
$\delta$ Block-side angle

**Claims**

1. A motion guide apparatus comprising:

   a rail member including a rolling groove extending in a longitudinal direction;
   a block including a rolling groove facing the rolling groove of the rail member, a return portion, and a turn portion connected to the rolling groove and the return portion; and
   a plurality of balls placed in a circulation path including a rolling path between the rolling groove of the rail member and the rolling groove of the block, the return portion, and the turn portion, wherein
   the balls are sandwiched between a wall surface of the rolling groove of the rail member and a wall surface of at least part of a turn groove of the turn portion of the block to change a course of the balls that have moved along the rolling path, and
   $\alpha + \beta < 180°$ is satisfied where $\alpha$ is a rail member-side angle formed by a line linking an effective end of the rolling groove of the rail member and a center of the ball on the rolling groove of the rail member, and a rolling groove center line of the rail member, and $\beta$ is a block-side angle formed by a line linking a contact point of the turn groove of the block and the ball and the center of the ball on the rolling groove of the rail member, and the rolling groove center line of the rail member.

2. The motion guide apparatus according to claim 1, wherein the contact point of the turn groove of the block with the ball is placed on a line that passes through the center of the ball and is orthogonal to the rolling groove center line of the rail member, or closer to the rail member than the line is to the rail member.

3. The motion guide apparatus according to claim 1 or 2, wherein
   $\gamma + \delta < 180°$ is satisfied in an area from a start point of a turn of the turn groove of the block to a point where $\gamma$ becomes 0°, where $\gamma$ is a shape angle of a rail member side surface formed by a line linking a contact point of a profile of a cross section of the rail member and the ball and the center of the ball, and the rolling groove center line of the rail member, and $\delta$ is a block-side angle formed by a line linking the contact point of the turn groove of the block and the ball and the center of the ball, and the rolling groove center line of the rail member.

4. The motion guide apparatus according to claim 3, wherein in the area from the start point of the turn of the turn groove of the block to the point where $\gamma$ becomes 0°, the contact point of the turn groove of the block and the ball is placed on the line that passes through the center of the ball and is orthogonal to the rolling groove center line of the rail member, or closer to the rail member than the line is to the rail member.

5. The motion guide apparatus according to claim 1 or 2, wherein of a pair of side surfaces of the rail member outside the rolling groove, one side surface that comes into contact with the ball protrudes toward the block more than the other side surface that does not come into contact with the ball.

6. The motion guide apparatus according to claim 1 or 2, wherein at least the rolling groove and the turn groove are continuously formed in the block being a single structure.

# FIG.1

UP

BACK

LEFT — RIGHT

FRONT

DOWN

# FIG. 2

## (a)

## (b)

# FIG. 3

# FIG. 4

(a)

(b)

# FIG. 5

FIG. 6

EP 4 553 328 A1

# FIG. 7

EMBODIMENT

## FIG. 8

COMPARATIVE EXAMPLE

# FIG. 9

EMBODIMENT

## INTERNATIONAL SEARCH REPORT

| International application No. |
| --- |
| **PCT/JP2023/024551** |

### A. CLASSIFICATION OF SUBJECT MATTER

*F16C 29/06*(2006.01)i
FI:  F16C29/06

According to International Patent Classification (IPC) or to both national classification and IPC

### B. FIELDS SEARCHED

Minimum documentation searched (classification system followed by classification symbols)

F16C29/00-F16C31/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2010-139008 A (THK CO LTD) 24 June 2010 (2010-06-24)<br>    paragraphs [0011]-[0026], fig. 1, 4, 6 | 1-2 |
| Y | | 6 |
| A | | 3-5 |
| Y | WO 2008/038674 A1 (THK CO LTD) 03 April 2008 (2008-04-03)<br>    paragraphs [0026]-[0034], fig. 1-5 | 6 |
| A | | 3-5 |
| Y | WO 2014/167853 A1 (THK CO LTD) 16 October 2014 (2014-10-16)<br>    paragraphs [0012]-[0033], fig. 1-4 | 6 |
| A | WO 2021/235075 A1 (THK CO LTD) 25 November 2021 (2021-11-25)<br>    paragraphs [0012]-[0020], fig. 1-3 | 1-6 |

☐ Further documents are listed in the continuation of Box C.   ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **21 August 2023** | **05 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/024551**

| Patent document cited in search report | | | Publication date (day/month/year) | Patent family member(s) | Publication date (day/month/year) |
|---|---|---|---|---|---|
| JP | 2010-139008 | A | 24 June 2010 | (Family: none) | |
| WO | 2008/038674 | A1 | 03 April 2008 | EP 2068016 A1 paragraphs [0026]-[0034], fig. 1-5 US 2009/0185765 A1 CN 101484712 A KR 10-2009-0015140 A | |
| WO | 2014/167853 | A1 | 16 October 2014 | US 2016/0305476 A1 paragraphs [0024]-[0045], fig. 1-4 CN 105121873 A | |
| WO | 2021/235075 | A1 | 25 November 2021 | CN 115667740 A KR 10-2023-0011973 A | |

Form PCT/ISA/210 (patent family annex) (January 2015)

REFERENCES CITED IN THE DESCRIPTION

**Patent documents cited in the description**

- WO 2008041589 A

- JP 2022109425 A